# EUROPEAN PATENT APPLICATION

(11) **EP 4 815 271 A1**
(43) Date of publication of application: **30.09.2026**
(21) Application number: 25221544.7
(22) Date of filing: 08.12.2025
(51) Int. Cl.: H02K 7/14, B64D 33/08, H02K 9/06, H02K 11/33

(54) **AIRCRAFT ELECTRIC MOTOR WITH COOLING SYSTEM**

(30) Priority: 18.12.2024 US 202418985557
(71) Applicant: Beta Air, LLC, South Burlington, Vermont 05403 (US)
(72) Inventor: BELZILE, Manon Danielle, Fairfield, 05455 (US); BRECHER, Stefan Stuart, Winooski, 05404 (US)
(74) Representative: Mewburn Ellis LLP

(57) **Abstract**

An electric motor includes a stator having a first side and a second side, a first housing coupled to the first side of the stator, and a second housing coupled to the second side of the stator. A shaft of the electric motor has a first end and a second end. The shaft is rotatably supported by a first bearing and a second bearing. A propeller of the electric motor couples to the first end of the shaft. An inverter includes an inverter housing directly coupled to the first housing.

## Description

### CROSS-REFERENCE TO RELATED APPLICATIONS

This application claims priority to U.S. Patent Application No. 18/985,557, filed December 18, 2024, entitled "Aircraft Electric Motor with Cooling System," which is a continuation-in-part of U.S. Patent Application No. 18/608,415, filed March 18, 2024, which is a continuation of U.S. Patent Application No. 17/966,809, filed October 15, 2022, now U.S. Patent No. 11,964,223, issued April 23, 2024, the entirety of which are herein incorporated by reference.

### BACKGROUND

Aircraft include, among other components, a fuselage, wings, and a propulsion system that provides thrust. Conventionally, the propulsion system is a turbofan or turbojet that operates on fuel. More recently, electric motors have been developed to lower carbon emissions, reduce noise, and lower operating costs. However, cooling electric motors remains an ongoing need. In addition, there is a desire to increase a power density of electric motors.

### SUMMARY

This application is directed, at least in part, to a propulsor of an aircraft having an electric motor and a cooling system, according to examples of the present disclosure. The propulsor may include inverters that power the electric motor. The inverters may directly couple to the electric motor to reduce a weight and/or form factor of the propulsor or more generally, the aircraft. The cooling system has an inertial air separator configured to separate an incoming airflow into a clean airflow and a dirty airflow. The clean airflow may be routed through the electric motor to cool components of the electric motor, such as a rotor and/or a stator. The clean airflow, after routing through the electric motor, may be used to cool the inverters. The dirty airflow, which may route around components of the electric motor, may additionally be used to cool the inverters. In some instances, the dirty airflow may flow across heat sinks coupled to the inverters to assist in heat transfer. The direct coupling of the inverters to the electric motor, as well as the cooling system, may increase a power density of the propulsor.

The propulsor may be a component and/or device used to propel the aircraft through air. Any number of propulsors may be disposed in, about, etc., wings, fuselages, etc., of the aircraft. The electric motor may convert electrical energy into mechanical energy and may be driven by direct current (DC) or alternating current (AC) electric power and may include, without limitation, brushless DC electric motors, switched reluctance motors, induction motors, or any combination thereof. The electric motor may also include electronic speed controllers or other components to regulate speed, rotational direction, and/or dynamic braking.

The stator represents a stationary component of the electric motor and includes a plurality of magnetic elements. In some instances, the stator may couple to an airframe of the aircraft to transfer loads into the airframe. For example, as will be explained herein, loads experienced by the electric motor may be transferred to the airframe via a coupling of the stator to the airframe. The rotor, which couples to a shaft of the electric motor, rotates with respect to the stator. As the stator generates magnetic fields, via the magnetic elements, the rotor is caused to rotate. The coupling of the shaft to the rotor correspondingly causes the shaft to rotate. A propellor of the propulsor, which couples to the shaft, propels the aircraft by transferring mechanical energy into thrust.

The propulsor includes an intake duct located on an inlet side of the propulsor. The inertial air separator, which may be disposed within the intake duct, receives the airflow at the inlet side and separates the airflow into the clean airflow and the dirty airflow. In some instances, 90% of the airflow is separated into the clean airflow and 10% of the airflow is separated into the dirty airflow. In some instances, the clean airflow may be alternatively referred to herein as a first airflow, and the dirty airflow may be alternatively referred to herein as a second airflow. The inertial air separator may separate physical particles from the airflow using a combination of forces such as, without limitation, a centrifugal force, a gravitational force, an inertial force, and the like. In some instances, the physical particles may include, without limitation, dust, dirt, sand, soot, rock, and the like. As used herein, a "clean airflow" may be air separated from impurities and a "dirty airflow" may be separated air with physical impurities. The impurities may include moisture (e.g., water and/or water vapor), vapors, and/or particles. The inertial air separator functions to move physical particles to an area where one or more forces exerted by airflow are minimal. Additionally, or alternatively, the inertial air separator may separate the airflow into a dry airflow and a wet airflow in a similar manner. In some instances, the clean airflow may be dry air and the dirty airflow may be wet air.

The clean airflow is routed through the electric motor to cool the stator, the rotor, bearings that couple the rotor to the shaft, and the like. In some instances, the clean airflow, as compared to the dirty airflow, may be used to cool components of the electric motor to mitigate degradation of the magnetic elements of the stator, AC leads, wires, cables, bearings, etc. In some instances, housings, shrouds, louvers, etc., may be used route, direct, or otherwise channel the clean airflow through components of the electric motor. For example, a front housing and one or more inlet shrouds may route the clean airflow into the electric motor. In some instances, the front housing and the one or more inlet shrouds may form channels, ducts, conduits, etc., to route the clean airflow from the intake duct to the electric motor.

In some instances, the front housing and/or the one or more inlet shrouds may couple to components of the electric motor. For example, the front housing may couple to the rotor and/or the shaft. The one or more inlet shrouds may couple to the stator. In addition, an impeller may be disposed within the one or more inlet shrouds and may couple to the shaft to assist in routing the clean airflow to the electric motor.

The clean airflow, after passing through the electric motor, may exit through a rear housing. The rear housing may be coupled to the electric motor, such as the stator, on a side opposite the front housing. The rear housing may include a plurality of orifices that permit the clean airflow to exit from within the electric motor. After exiting the orifices, the clean airflow may route across, over, etc., the inverters. In some instances, one or more outlet shrouds may route the clean airflow from the orifices to the inverters. In this manner, the clean airflow not only cools the electric motor but may additionally cool the inverters. The one or more outlet shrouds may be coupled to the inverters and/or the rear housing. After routing over the inverters, the clean airflow may exit the propulsor at an outlet side adjacent to the propeller.

In some instances, the inverters may be directly coupled to the rear housing. For example, fasteners (e.g., bolts, screws, etc.) may be used to couple the inverters to the housing. The coupling of the inverters to the rear housing correspondingly couples the inverters to the airframe (e.g., via a coupling of the rear housing to the stator and the stator to the airframe). In some instances, spacers (e.g., standoffs, posts, pegs, etc.) may be disposed between portions of the inverters and the rear housing, and the fasteners may be disposed partially through the spacers for coupling the inverters to the rear housing. Any number of fasteners may be used to couple the inverters to the housing.

The direct coupling of the inverters to the, e.g., rear housing functions to transfer loads from the propeller to the airframe. For example, the inverters may include a housing and electrical components known in the art of inverters are disposed in the housing for receiving DC and providing AC to the motor. The housings of the inverter may be coupled to the rear housing and are configured to transfer and carry loads. The housings of the inverter may, therefore, form a part of an overall propulsion motor structural assembly and the housings may be designed not only to house inverter components but also as structural members. For example, as thrust is generated from the propellor, the thrust may be transferred from the propeller, to the inverters, to the rear housing, to the stator, and then into the airframe. The coupling of the inverters to the rear housing also reduces a weight of the propulsor. For example, coupling the inverters to the rear housing structurally integrates the inverters and the rear housing. This has the effect of reducing a size, amount of material, etc., of the inverters and the rear housing than if inverters and the rear housing were separately supported within the propulsor. In addition, the direct coupling of the inventers to the rear housing may also reduce a length of AC leads (e.g., cables, wires, etc.) disposed between the inverters and the electric motor. Shortening the AC leads may reduce electromagnetic fields (EMF) interference with electronic components of the aircraft.

The dirty airflow, meanwhile, may route around the electric motor, such as along an outside of the stator, to the inverters. In some instances, the one or more inlet shrouds and the one or more outlet shrouds may fluidly couple to direct the dirty airflow to the inverters. For example, the one or more inlet shrouds may route the dirty airflow to the one or more outlet shrouds, and therein, the one or more outlet shrouds may route the dirty airflow across the heat sinks of the inverters. The heat sinks may include fins, posts, etc., across which the dirty airflow is routed. The impeller may also assist in routing the dirty airflow to the inverters. In some instances, the one or more inlet shrouds, the stator, and the one or more outlet shrouds may form channels, ducts, conduits, etc., to route the dirty airflow to the electric motor. The dirty airflow may exit the propulsor at the outlet side adjacent to the propeller.

The inverters may include suitable components for switching from AC to DC. For example, the inverters may include Silicon Carbide (SiC) MOSFETs for switching from AC to DC, capacitors, resistors, etc. In some instances, the heat sinks are mounted to the inverters adjacent to where the SiC MOSFETs are located. Being as the SiC MOSFETs generate a significant amount of the heat within the inverters, arranging the heat sink in this manner may improve heat transfer.

In some instances, the dirty airflow may route around an outside of the inverters while the clean airflow may route along an inside of the inverters. After routing along the outside and the inside, respectively, the dirty airflow and the clean airflow may combine and exit the propulsor at the outlet side. Accordingly, the inverters may be cooled along one or more sides using different airflows.

In some instances, the electric motor may include two or more inverters disposed in corresponding inverter housings. In addition to being coupled to, .e.g., the rear housing, in some instances, the two inverters may be coupled together via one or more brackets or other structural members. The coupling of the inverters to one another may increase a structural rigidity of the inverters and the overall structural assembly. The inverters may include any suitable shape. In some instances, the inverters may include a C-shape. The C-shape nature of the inverters may accommodate the shaft. For example, the inverters may be at least partially disposed around the shaft. In instances in which the propulsor includes two of the inverters, the one or more inlet shrouds and the one or more outlet shrouds may respectively route the clean airflow and the dirty airflow to the inverters. For example, one or more first outlet shrouds may direct a first portion of the dirty airflow across a first heat sink of a first inventor, and one or more second outlet shrouds may direct a second portion of the dirty airflow across a second heat sink of a second invertor.

The inverters themselves may include inverter housings, whereby the inverter housings may be coupled to the rear housing and/or disposed around the shaft. The inverter housings may define an approximately annular volume through which the clean airflow is routed out of the electric motor. The shaft may be disposed radially inward of the annular volume. The inverter housings may also be coupled together (e.g., structurally interconnected) and coupled to the rear housing.

However, although a particular number and/or shape of the inverters are described, the propulsor may include any number of inverters and/or the inverters may include any shape. For example, four inverters may be coupled to the rear housing, and/or the inverters may be rectangular-shaped. In such instances, the propulsor may include any number of the inlet shrouds and the outlet shrouds to route the clean airflow and dirty airflow to the inverters, respectively.

The propulsor may include additional or alternative components other than those described. For example, sensor(s) may be used to measure a temperature of the inverters and/or the electric motor for adjusting the clean airflow and/or the dirty airflow. For example, valves, actuators, etc., may be controlled to adjust an amount of the clean airflow and/or the dirty airflow. Additionally, louvres, slots, fins, flanges, etc., may be used to route the clean airflow and/or the dirty airflow throughout the propulsor.

The present disclosure provides an overall understanding of the principles of the structure, function, device, and system disclosed herein. One or more examples of the present disclosure are illustrated in the accompanying drawings. Those of ordinary skill in the art will understand and appreciate that the devices, the systems, and/or the methods specifically described herein and illustrated in the accompanying drawings are non-limiting embodiments. The features illustrated or described in connection with one embodiment or instance may be combined with the features of other embodiments or instances. Such modifications and variations are intended to be included within the scope of the disclosure and appended claims.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features. The systems depicted in the accompanying figures are not to scale and components within the figures may be depicted not to scale with each other.
FIG. 1 illustrates an example propulsor for an aircraft, according to examples of the present disclosure.
FIG. 2 illustrates a partially exploded view of the propulsor of FIG. 1, including an electric motor, inverters, and shrouds, according to examples of the present disclosure.
FIG. 3 illustrates a cross-sectional view of the propulsor of FIG. 1, showing example components of the propulsor and airflows that provide cooling to the components of the propulsor, according to examples of the present disclosure.
FIG. 4A illustrates a front isometric view of the electric motor, the inverters, and the shrouds that provide cooling to the components of the propulsor of FIG. 1, according to examples of the present disclosure.
FIG. 4B illustrates a rear isometric view of the electric motor, the inverters coupled to a rear housing of the electric motor, and the shrouds that provide cooling to the components of the propulsor of FIG. 1, according to examples of the present disclosure.
FIG. 4C illustrates a rear planar view of the electric motor, the inverters, and the shrouds that provide cooling to the components of the propulsor of FIG. 1, according to examples of the present disclosure.
FIG. 4D illustrates a top planar view of the electric motor, the inverters coupled to the rear housing, and the shrouds of the propulsor of FIG. 1, according to examples of the present disclosure.
FIG. 5 illustrates an isometric partial view of the electric motor and the inverters of the propulsor of FIG. 1, showing a coupling between the inverters and the rear housing of the electric motor, according to examples of the present disclosure.
FIG. 6 illustrates an example coupling between the inverters and the rear housing of the propulsor of FIG. 1, whereby a post is disposed between the inverters and the rear housing, according to examples of the present disclosure.
FIG. 7 illustrates an example coupling between the inverters and the rear housing of the propulsor of FIG. 1, whereby the inverters directly abut the rear housing, according to examples of the present disclosure.
FIG. 8 illustrates example mounting locations between the inverters and the rear housing of the propulsor of FIG. 1, according to examples of the present disclosure.
FIG. 9 illustrates an example direct coupling between the inverters and the rear housing of the propulsor of FIG. 1, according to examples of the present disclosure.
FIG. 10 illustrates a coupling of the electric motor and the shrouds to an airframe of the aircraft, according to examples of the present disclosure.

### DETAILED DESCRIPTION

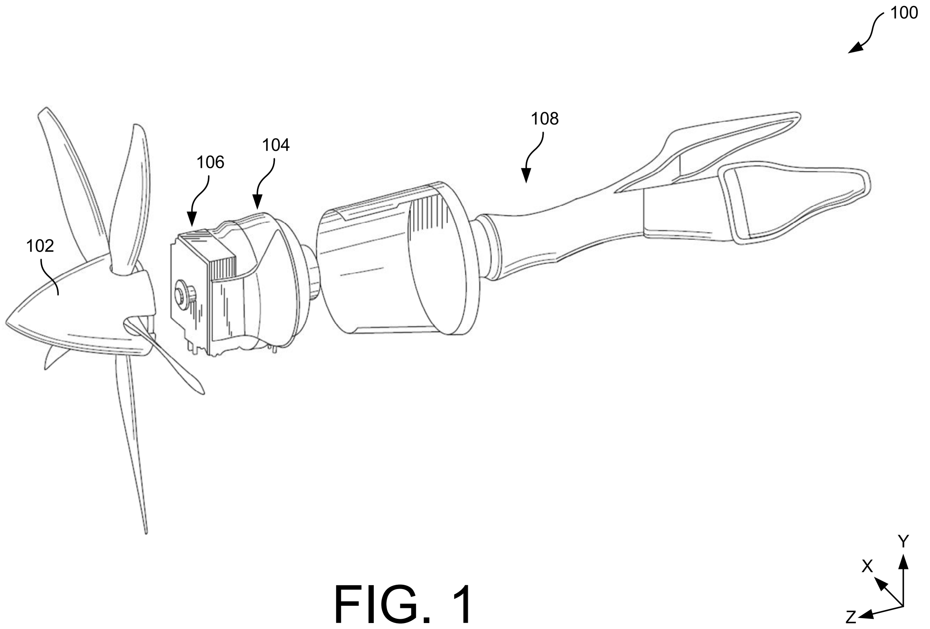

FIG. 1 illustrates an example propulsor 100 of an aircraft, according to examples of the present disclosure. In some instances, the propulsor 100 includes a propeller 102, an electric motor 104, one or more inverters 106, and an intake duct 108.

The propulsor 100 is configured to propel the aircraft through air. Additionally, the aircraft includes any number of the propulsors 100 disposed in, about, etc., wings, fuselages, etc., of the aircraft. The electric motor 104 converts electrical energy into mechanical energy. For example, the electric motor 104 is driven by DC or AC. The electric motor 104 also includes electronic speed controllers or other components to regulate speed, rotational direction, and/or dynamic braking. The one or more inverters 106 include suitable components for switching from AC to DC

As will be explained herein, the intake duct 108 directs an inflow into the electric motor 104 and across the one or more inverters 106, for example, to provide cooling. Additional housings, shrouds, etc., of the propulsor 100 assist in routing the air through the electric motor 104 and/or to the one or more inverters 106. The one or more inverters 106 directly couples to the electric motor 104 to transfer forces (e.g., thrust) generated from the propeller 102 into an airframe of the aircraft.

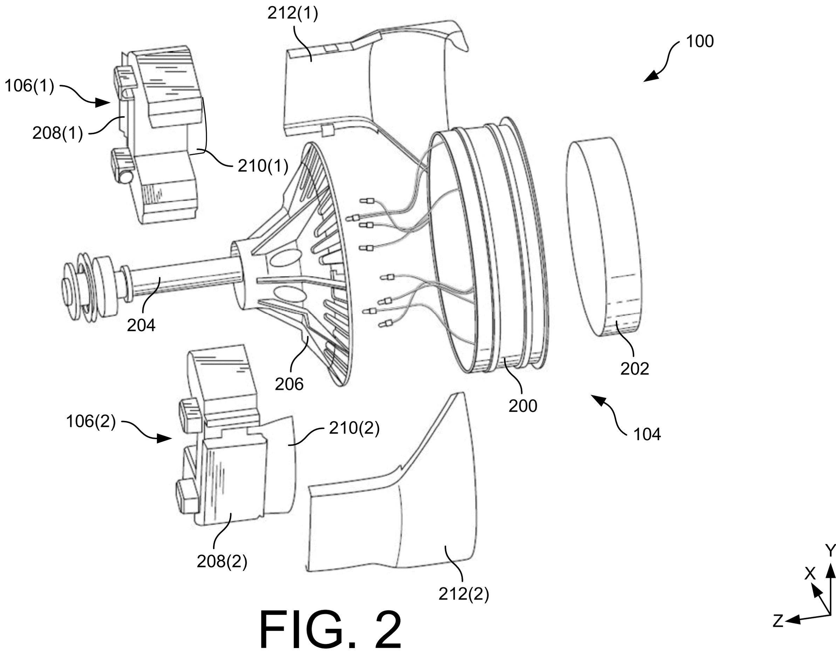

FIG. 2 illustrates a partially exploded view of the propulsor 100, according to examples of the present disclosure. The electric motor 104 includes a stator 200, a rotor 202, and a shaft 204. The stator 200, which represents a stationary component of the electric motor 104, includes one or more magnetic elements that generate a magnetic field for causing the rotor 202 to rotate. For example, the rotor 202 rotates within the stator 200. The stator 200 couples to the airframe of the aircraft to remain stationary. The propeller 102 couples to the rotor 202 via the shaft 204 and as the rotor 202 rotates, mechanical energy is transferred to the propeller 102 to generate thrust for propelling the aircraft.

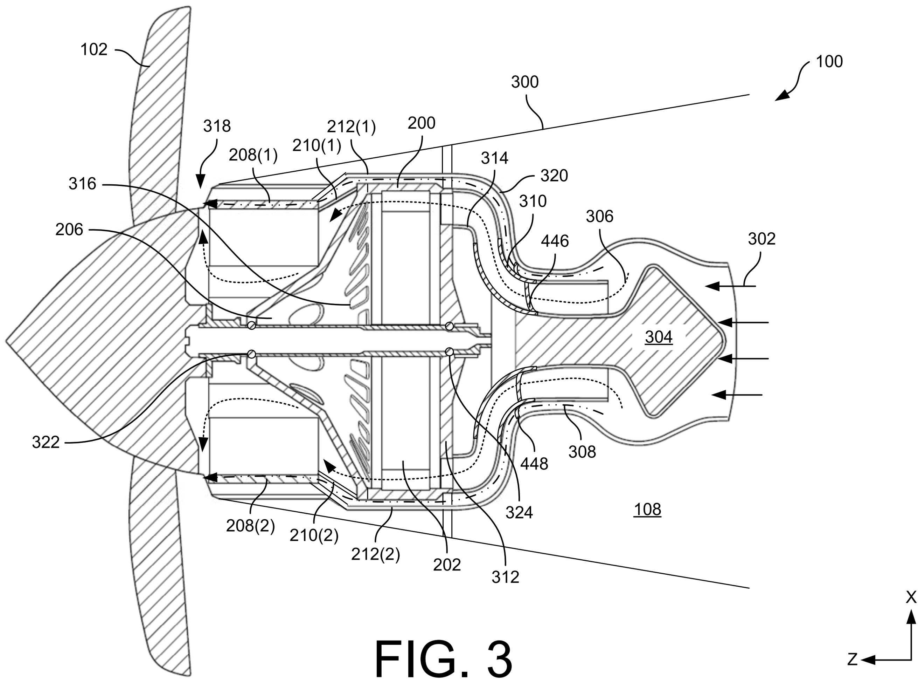

The propulsor 100 includes a rear housing 206 that couples to the stator 200. The shaft 204 extends through the rear housing 206, such as an opening in the rear housing 206, for coupling to the rotor 202. The rear housing 206, given a coupling to the stator 200, remains stationary during operation of the electric motor 104. The rear housing 206 is disposed about the shaft 204 via one or more bearings (seen in FIG. 3). The one or more bearings between the rear housing 206 and the shaft 204 rotatably supports the shaft 204.

In some instances, the one or more inverters 106 include a first inverter 106(1) and a second inverter 106(2). The first inverter 106(1) and the second inverter 106(2) couple to the rear housing 206, for example, via one or more fasteners. In addition, the first inverter 106(1) and the second inverter 106(2) couple to one another. Coupling the first inverter 106(1) and the second inverter 106(2) couple to one another increases a structural rigidity of the propulsor 100 and transfers loads between the first inverter 106(1) and the second inverter 106(2). As will be explained herein, the first inverter 106(1) and the second inverter 106(2) include a C-shape (e.g., about an X-Y plane). The C-shape of the first inverter 106(1) and the second inverter 106(2) accommodate the shaft 204. For example, the shaft 204 is disposed through a channel defined by the first inverter 106(1) and the second inverter 106(2).

Heat sinks 208 couple to the first inverter 106(1) and the second inverter 106(2), respectively, to assist in heat transfer. For example, a first heat sink 208(1) couples to the first inverter 106(1) and a second heat sink 208(2) couples to the second inverter 106(2). A second airflow, which routes around the electric motor 104, is directed over, through, etc., the heat sinks 208 to provide cooling to the one or more inverters 106. In some instances, the propulsor 100 includes shrouds that direct, channel, etc., the second airflow to the heat sinks 208 of the inverters 106, respectively. For example, outlet shrouds direct the second airflow to the heat sinks 208 of the inverters 106, respectively. As will be explained herein, inlet shrouds direct the second airflow to the outlet shrouds, as well as the first airflow into the electric motor 104.

In some instances, first outlet shrouds direct a first portion of the second airflow to the first heat sink 208(1) and second outlet shrouds direct a second portion of the second airflow to the second heat sink 208(2). In some instances, the outlet shrouds include internal outlet shrouds 210 and external outlet shrouds 212. The first outlet shrouds include a first internal outlet shroud 210(1) and a first external outlet shroud 212(1). The second outlet shrouds include a second internal outlet shroud 210(2) and a second external outlet shroud 212(2). Details of the outlet shrouds are discussed herein, however, the internal outlet shrouds 210 are disposed between portions of the inverters 106 and the rear housing 206, for directing the first airflow from the orifices in the rear housing 206 across the inverters 106. Additionally, the internal outlet shrouds 210 direct the portions of the second airflow across the heat sinks 208. The external outlet shrouds 212 are at least partially disposed over (e.g., encapsulate) to direct the second airflow across the heat sinks 208.

Although the heat sinks 208 are shown as being externally facing, in some instances, the heat sinks 208 are additionally or alternatively internally facing. For example, in some instances, the heat sinks 208 are oriented towards or face one another.

FIG. 3 illustrates a cross-sectional view of the propulsor 100, according to examples of the present disclosure. As introduced above, the electric motor 104 includes the stator 200 and the rotor 202. The stator 200 couples to an airframe 300 (e.g., cowling, frame, etc.) of an aircraft. The rotor 202 couples to the shaft 204 and is at least partially disposed through the rear housing 206 for coupling to the propeller 102. Bearings 322 are disposed at an interface between the rear housing 206 and the shaft 204. The bearings 322 between the rear housing 206 and the shaft 204 rotatably support the shaft 204. Moreover, as discussed above, the rear housing 206 couples to the stator 200 to remain stationary during operation of the electric motor 104.

The intake duct 108 channels, funnels, or otherwise routes an airflow 302 into the propulsor 100. In the illustrated example, the propulsor 100 includes an inertial air separator 304 configured to separate the airflow 302 into a clean airflow 306 and a dirty airflow 308. In other examples, propulsors of the present disclosure do not include an inertial air separator. In some instances, 90% of the airflow 302 is separated into the clean airflow 306 and 10% of the airflow is separated into the dirty airflow 308. The inertial air separator 304 separates physical particles from the airflow 302 using a combination of forces such as centrifugal forces, gravitational forces, inertial forces, etc. Examples of the physical particles in the airflow 302 include dust, dirt, sand, soot, rock, etc. The clean airflow 306 is air from the airflow 302 separated from impurities, whereas the dirty airflow 308 is air separated from the airflow 302 and that contains some level of physical impurities. Impurities include moisture, vapors, and/or particles. The dirty airflow 308 also include emissions, chemicals from factories, dust, pollen, mold spores, ozone, and the like thereof. In some instances, the inertial air separator 304 separates the airflow 302 into a dry airflow and a wet airflow in a similar manner, where the clean airflow 306 is dry air and the dirty airflow 308 is wet air.

The clean airflow 306 is routed through the electric motor 104, such as through the stator 200 and the rotor 202, to provide cooling. The propulsor 100 includes one or more inlet shrouds that direct the clean airflow 306 into the electric motor 104. In addition, the clean airflow 306 routes through an impeller 310 to assist in routing the clean airflow 306 to the electric motor 104. The impeller 310 couples to the shaft 204, at a location opposite to where the propeller 102 couples to the shaft 204. The impeller 310 is configured to rotate with the shaft 204 during operation of the electric motor 104. The impeller 310 includes blades, vanes, or fins that assist in forming passageways, ducts, channels, etc., for routing the clean airflow 306 and the dirty airflow 308. The impeller 310 is disposed between a front housing 312 and the inertial air separator 304.

The front housing 312 also directs the clean airflow 306 into the electric motor. In some instances, the front housing 312 and the impeller 310 couple to the shaft 204. Bearings 324 are disposed between an interface of the front housing 312 and the shaft 204. The bearings 324 rotatably support the shaft 204.

As the clean airflow 306 is separated from the dirty airflow 308, the clean airflow 306 flows through the impeller 310. Therein, the front housing 312 and an internal inlet shroud 314 of the inlet shrouds routes the clean airflow 306 into the electric motor 104. For example, the clean airflow 306 routes between the rotor 202 and the stator 200. The internal inlet shroud 314 is radially disposed about the shaft 204, but couples to the stator 200 and remain stationary during operation of the electric motor 104.

As shown, the clean airflow 306 routes internal to, within, etc., the stator 200. After flowing through the electric motor 104, the clean airflow 306 routes through orifices 316 in the rear housing 206. The internal outlet shrouds 210, which are disposed between the rear housing 206 and the inverters 106, routes the clean airflow 306 towards an interior of the inverters 106. In other words, the clean airflow 306 is directed towards the shaft 204. Therein, the clean airflow 306 passes within the interior of the inverters 106 and exit through an outlet duct 318 adjacent to the propeller 102.

The dirty airflow 308 flows around the impeller 310. Blades, vanes, or fins of the impeller 310 assists in routing the dirty airflow 308 (as well as the clean airflow 306). An external inlet shroud 320 is disposed around the internal inlet shroud 314, for routing the dirty airflow 308 to the inverters 106. Additionally, the external inlet shroud 320 is disposed at least partially around the impeller 310 (e.g., the external inlet shroud 320 encloses or conceals the impeller 310). The dirty airflow 308 routes between an exterior surface of the internal inlet shroud 314 and an interior surface of the external inlet shroud 320. The external inlet shroud 320 is radially disposed about the shaft 204 and enclose (e.g., surround) the internal inlet shroud 314. The external inlet shroud 320 couples to the stator 200 and remain stationary during operation of the electric motor 104. The dirty airflow 308 is routed to the outlet shrouds, via the internal inlet shroud 314 and the external inlet shroud 320. Therein, the dirty airflow 308 flow around an outside (e.g., external to) the stator 200.

As will be explained herein, while the internal inlet shroud 314 and the external inlet shroud 320 is disposed about an entirety of the propulsor 100 (e.g., 360 degrees about the Z-axis), the outlet shrouds are disposed about less than an entirety. The external outlet shrouds 212 route the dirty airflow 308 to the heat sinks 208. Moreover, the internal outlet shrouds 210, in addition to routing the clean airflow 306 through and interior of the inverters 106, route the dirty airflow 308 through the heat sinks 208. As such, the dirty airflow 308 routes external to inverters 106. After flowing through the heat sinks 208, the dirty airflow 308 exits through the outlet duct 318 adjacent to the propeller 102.

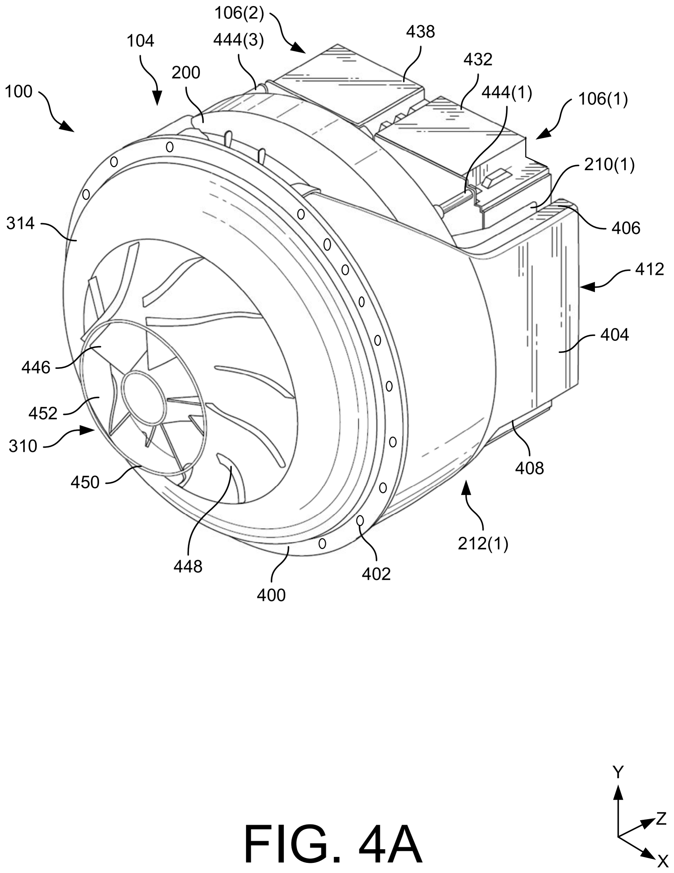

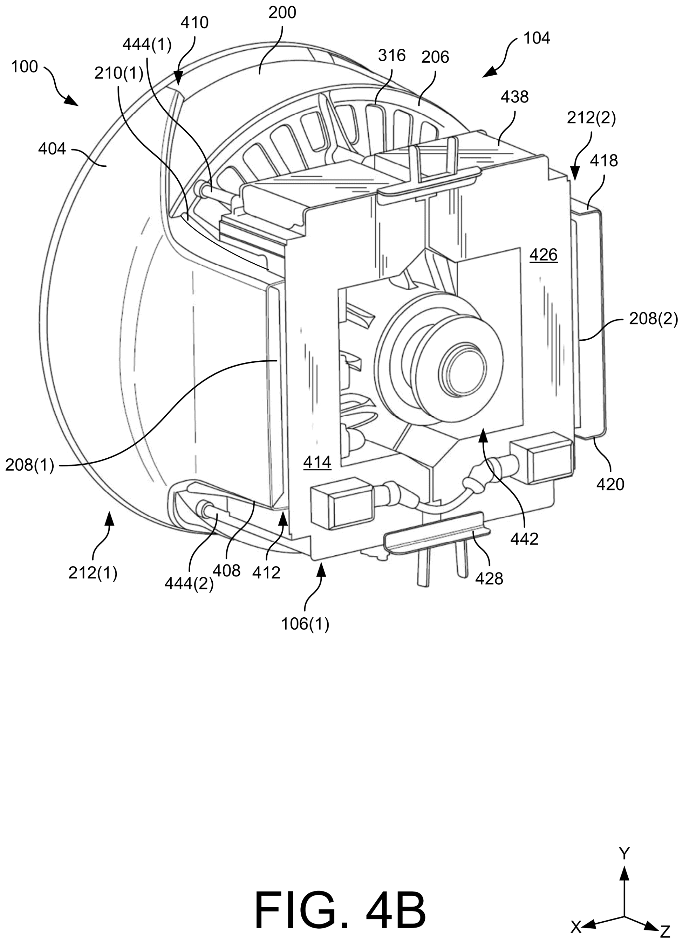

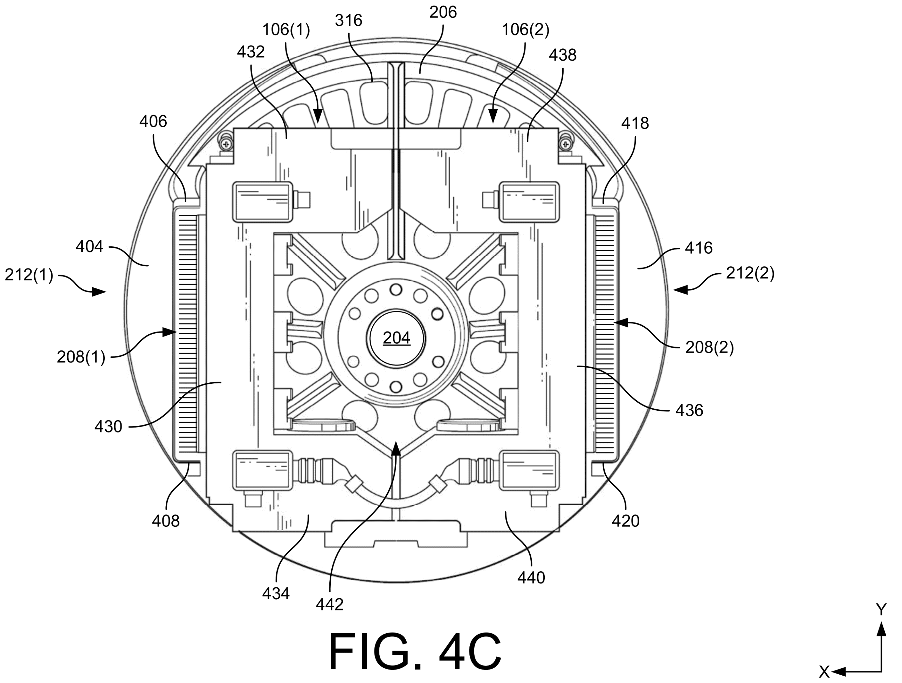

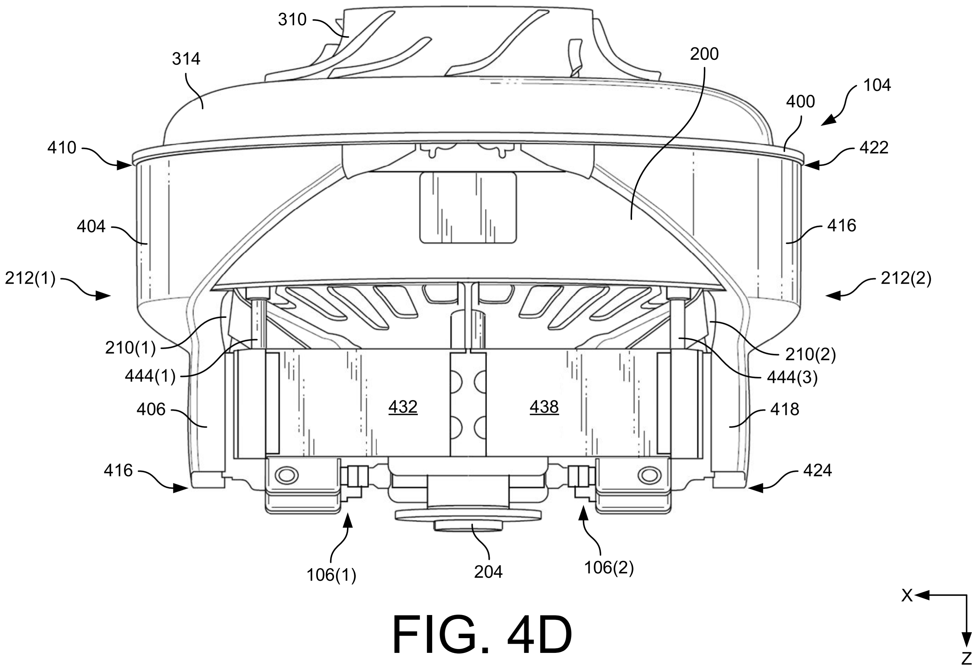

FIGS. 4A-4D illustrate details of the propulsor 100, according to examples of the present disclosure. In FIGS. 4A-4D, the external inlet shroud 320 is shown removed. The impeller 310, which is disposed within an opening of the internal inlet shroud 314, urges the clean airflow 306 through the electric motor 104. For example, the impeller 310 includes first rotating blades 446 that route the clean airflow 306 through the electric motor 104. In addition, the impeller 310 assists in routing the dirty airflow 308 between the internal inlet shroud 314 and the external inlet shroud 320. For example, the impeller 310 includes second rotating blades 448 that route the dirty airflow 308 around the electric motor 104. The impeller 310 includes a first rotating shroud 450 and a second rotating shroud 452. The first rotating blades 446 extends between the first rotating shroud 450 and the second rotating shroud 452. For example, the first rotating blades 446 extend from a surface of the first rotating shroud 450 to a surface of the second rotating shroud 452. The second rotating blades 448 extend from a surface of the first rotating shroud 450, on a surface opposite to where the first rotating blades 446 are disposed. As also shown, the second rotating blades 448 include a height that is less than a height of the first rotating blades 446. The second rotating blades 448 move relative to the external inlet shroud 320. A flange 400, which is a component of the internal inlet shroud 314, includes openings 402 that route the dirty airflow 308 into the outlet shrouds.

The first outlet shrouds route a first portion of the dirty airflow 308 to the first inverter 106(1), or the first heat sink 208(1). The second outlet shrouds route a second portion of the dirty airflow 308 to the second inverter 106(2), or the second heat sink 208(2). The outlet shrouds include sidewalls, flanges, etc., for routing the dirty airflow 308 to the inverters 106, respectively. For example, the first external outlet shroud 212(1) includes a first sidewall 404, a second sidewall 406, and a third sidewall 408. The first sidewall 404 extends over a periphery of the stator 200 and/or the first inverter 106(1). The first external outlet shroud 212(1) includes a first end 410 disposed proximate to the flange 400, and a second end 412 disposed adjacent to a rear surface 414 of the first inverter 106(1). The first external outlet shroud 212(1), or the first sidewall 404, tapers (e.g., in the Y-direction) to funnel the dirty airflow 308 across the first heat sink 208(1). The second sidewall 406 and the third sidewall 408 extend from the first sidewall 404. Moreover, the first internal outlet shroud 210(1) abut or adjoin to the second sidewall 406 and/or the third sidewall 408. The first sidewall 404 is disposed over a top of the first heat sink 208(1), while the second sidewall 406 and the third sidewall 408 are disposed over sides of the first heat sink 208(1). A bottom of the first heat sink 208(1) couples to the first inverter 106(1). The first external outlet shroud 212(1) is open at the second end 412 to permit the dirty airflow 308 to exit after flowing through the first heat sink 208(1). In some instances, the first external outlet shroud 212(1) couples to the flange 400, the rear housing 206, and/or the first inverter 106(1).

The second external outlet shroud 212(2) is similar to the first external outlet shroud 212(1). For example, the second external outlet shroud 212(2) includes a first sidewall 416, a second sidewall 418, and a third sidewall 420. The first sidewall 416 extends over a periphery of the stator 200 and/or the second inverter 106(2). The second external outlet shroud 212(2) includes a first end 422 disposed proximate to the flange 400, and a second end 424 disposed adjacent to a rear surface 426 of the second inverter 106(2). The second external outlet shroud 212(2), or the first sidewall 416, tapers (e.g., in the Y-direction) to funnel the dirty airflow 308 across the second heat sink 208(2). The second sidewall 418 and the third sidewall 420 extends from the first sidewall 416. Moreover, the second internal outlet shroud 210(2) abuts or adjoin to the second sidewall 418 and/or the third sidewall 420. The first sidewall 416 is disposed over a top of the second heat sink 208(2), while the second sidewall 418 and the third sidewall 420 is disposed over sides of the second heat sink 208(2). A bottom of the second heat sink 208(2) couples to the second inverter 106(2). The second external outlet shroud 212(2) is open at the second end 424 to permit the dirty airflow 308 to exit after flowing through the second heat sink 208(2). In some instances, the second external outlet shroud 212(2) couples to the flange 400, the rear housing 206, and/or the second inverter 106(2).

The first inverter 106(1) and the second inverter 106(2) is coupled to one another. For example, one or more brackets 428 (e.g., ties, struts, bars, etc.) is disposed between the rear surface 414 and the rear surface 426 for coupling the first inverter 106(1) and the second inverter 106(2) together. Coupling the first inverter 106(1) and the second inverter 106(2) together increase a structural integrity of the first inverter 106(1) and the second inverter 106(2), and/or reduce a weight of the first inverter 106(1) and the second inverter 106(2).

The first inverter 106(1) and the second inverter 106(2) are shown including a C-shape (e.g., about the X-Y plane). The first inverter 106(1) includes a base 430, a first arm 432, and a second arm 434. The first arm 432 and the second arm 434 extends from the base 430, thereby forming the C-shape. The base 430, the first arm 432, and the second arm 434 represents a housing of the first inverter 106(1). The housing of the first inverter 106(1) couples to the rear housing 206. Similarly, in some instances, the second inverter 106(2) includes a base 436, a first arm 438, and a second arm 440. The first arm 438 and the second arm 440 extend from the base 436, thereby forming the C-shape. The base 436, the first arm 438, and the second arm 440 represents a housing of the second inverter 106(2). The housing of the second inverter 106(2) couples to the rear housing 206. In some instances, the first arm 432 and the first arm 438 and/or the second arm 434 and the second arm 440 couple together via the brackets 428.

The first heat sink 208(1) is disposed the base 430 and the second heat sink 208(2) is disposed on the base 436. In some instances, the first inverter 106(1) includes SiC MOSFETs disposed within the base 430, or more generally, a housing of the first inverter 106(1), for switching from AC to DC. Being as the SiC MOSFETs generates a significant amount of the heat, arranging the first heat sink 208(1) on the base 430 improves heat transfer. The second inverter 106(2) also includes SiC MOSFETs disposed within the base 436 or more generally, a housing of the second inverter 106(2).

The C-shape of the first inverter 106(1) and the second inverter 106(2) form an internal channel 442 through which the clean airflow 306 is routed. For example, as the clean airflow 306 exits the electric motor 104 and flows out the rear housing 206, via the orifices 316, the clean airflow 306 flows through the internal channel 442. The internal channel 442 is defined at least in part by the first inverter 106(1), the second inverter 106(2), the rear housing 206, and/or the shaft 204. In some instances, only a portion of the clean airflow 306 is directed through, or routed through, the internal channel 442. For example, the clean airflow 306 is directed over the first arm 432, the second arm 434, the first arm 432, and/or the second arm 440. That is, the internal outlet shrouds 210 are not disposed around an entirety of the rear housing 206. In some instances, the internal outlet shrouds 210 is disposed adjacent to the base 430 and the base 436 to route the clean airflow 306 across the base 430 and the base 436 in which the SiC MOSFETs are located.

The inverters 106 couple to the rear housing 206. In some instances, the inverters 106 directly abut the rear housing 206 and couple to the rear housing 206, and/or couple to the rear housing 206 via one or more posts 444 (e.g., pegs, standoffs, spacers, etc.). Fasteners are disposed through the one or more posts 444, respectively, and into the rear housing 206 to couple the inverters 106 to the rear housing 206. The posts 444 are of different lengths to accommodate a distance disposed between the inverters 106 and the rear housing 206. Correspondingly, the fasteners may be different lengths. Any number of fastening locations or mounting locations are used to couple the inverters 106 to the rear housing 206. For example, in some instances, each of the inverters 106 couple to the rear housing 206 at six locations.

A first post 444(1) and a second post 444(2) extend between the rear housing 206 and the first inverter 106(1). Fasteners are disposed through the first post 444(1) and the second post 444(2), and into the rear housing 206 (e.g., threaded receptacles), for coupling the first inverter 106(1) to the rear housing 206. In other instances, the posts 444 are not needed, and the first inverter 106(1) directly contacts the rear housing 206. The first inverter 106(1) is secured at such locations via fasteners. Likewise, a third post 444(3) and a fourth post (which is obscured) extend between the rear housing 206 and the second inverter 106(2). Fasteners are disposed through the third post 444(3) and the fourth post, into the rear housing 206, for coupling the second inverter 106(2) to the rear housing 206. In other instances, the second inverter 106(2) directly contacts the rear housing 206 and is secured at such locations via fasteners.

The direct coupling of the inverters 106 to the rear housing 206 transfers loads from the propeller 102 to the airframe 300. For example, as thrust is generated from the propeller 102, the thrust is imparted to the inverters 106 from the propeller 102. The coupling of the inverters 106 to the rear housing 206 transfers the thrust into the rear housing 206, to the stator 200, and ultimately into the airframe 300. The coupling of the inverters 106 to the rear housing 206 reduces a weight of the propulsor 100. For example, structurally integrating the inverters 106 and the rear housing 206 reduces a size, amount of material, etc., of the inverters 106 and the rear housing 206 as compared to if the inverters 106 and the rear housing 206 were separately supported within the propulsor 100. In addition, the direct coupling of the inverters 106 to the rear housing 206 also reduces a length of AC leads disposed between the inverters 106 and the electric motor 104 (e.g., the stator 200). Shortening the AC leads reduces EMF interference with electronic components of the aircraft.

Although a particular number and/or shape of the inverters 106 are described, the propulsor 100 includes any number of the inverters 106 and/or the inverters 106 include any shape. For example, in an embodiment, three or four inverters couple to the rear housing 206, and/or the inverters 106 are rectangular-shaped. In such instances, the propulsor 100 includes any number of the inlet shrouds and the outlet shrouds to route the clean airflow 306 and dirty airflow 308 across, over, etc., the inverters 106. Moreover, the inverters 106 are coupled to one another (e.g., via the brackets 428).

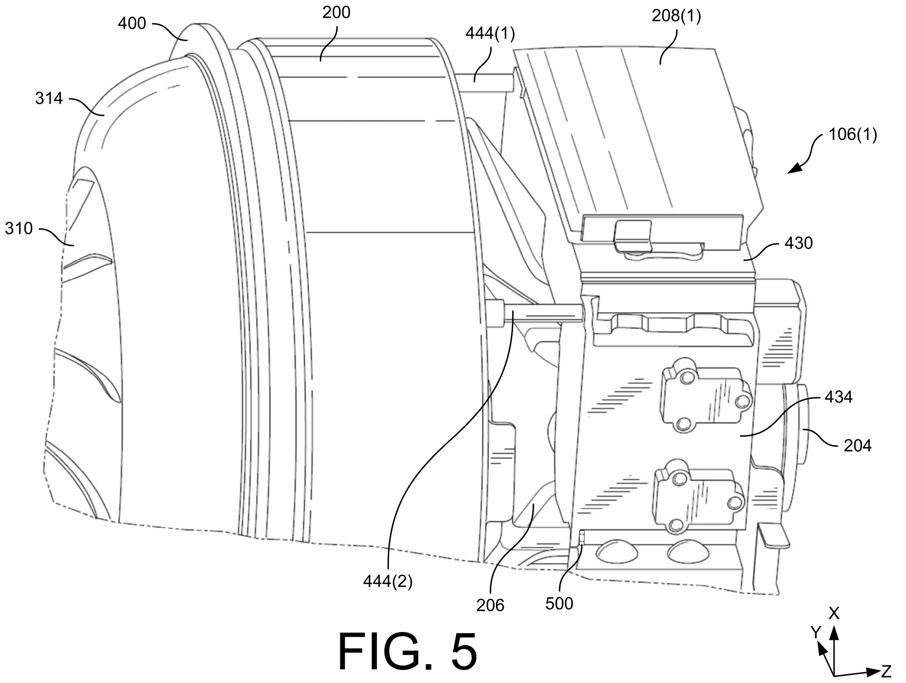

FIG. 5 illustrates an isometric view of a portion of the propulsor 100, showing the outlet shrouds removed, according to examples of the present disclosure. As shown, the first heat sink 208(1) is coupled to (e.g., mounted) the first inverter 106(1) along the base 430. The first post 444(1) and the second post 444(2) extend between the first inverter 106(1) and the rear housing 206. Fasteners are disposed at least partially through the first post 444(1) and the second post 444(2), and into the rear housing 206, for coupling the first inverter 106(1) to the rear housing 206.

Other fasteners couple the first inverter 106(1) to the rear housing 206. For example, at a location where the first inverter 106(1) directly abuts the rear housing 206, a fastener 500 threads into the rear housing 206. Any number of fasteners are used to secure the first inverter 106(1) to the rear housing 206. In some instances, alignment mechanisms (e.g., keys/keyways, tabs/slots, etc.) are used to align the first inverter 106(1) to the rear housing 206. Although not shown, the second inverter 106(2) similarly couples to the rear housing 206.

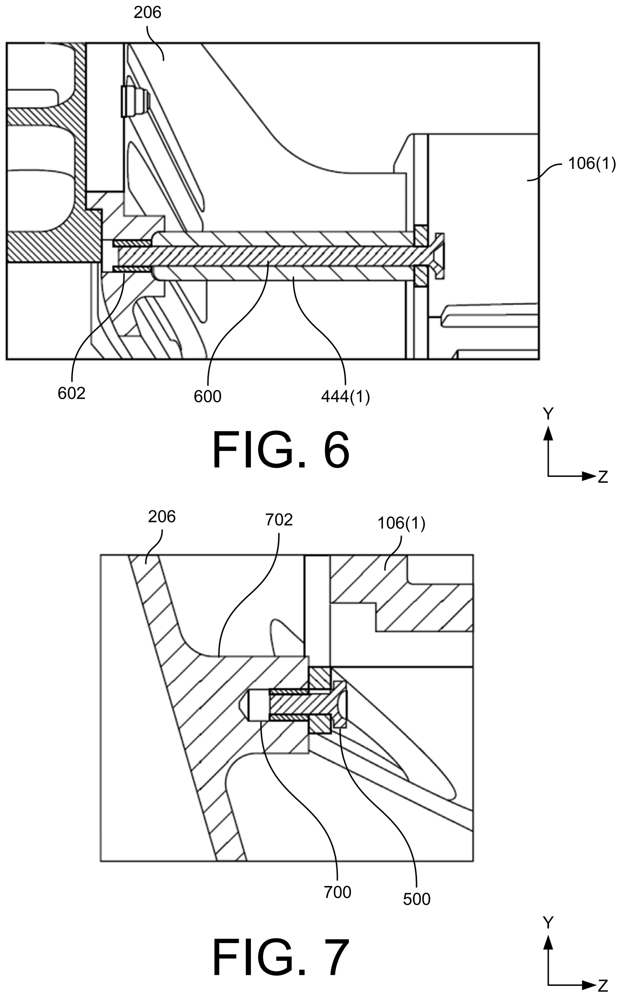

FIG. 6 illustrates a coupling of the first inverter 106(1) to the rear housing 206, according to examples of the present disclosure. As introduced above, the first post 444(1) is disposed between the first inverter 106(1) and the rear housing 206. A fastener 600 is disposed through the first post 444(1) and into a receptacle 602 (e.g., threaded receptacle) defined by the rear housing 206. As the fastener 600 is tightened, the first inverter 106(1) becomes secured to the rear housing 206. The first post 444(1) includes a first length (e.g., in the Z-direction) to accommodate a distance disposed between the first inverter 106(1) and the rear housing 206. Other posts, however, that couple the first inverter 106(1) (or the second inverter 106(2)) to the rear housing 206, include similar or different lengths. For example, depending upon a gap distance disposed between the first inverter 106(1) and the rear housing 206, the length of the posts 444 are similar or different.

FIG. 7 illustrates a coupling of the first inverter 106(1) to the rear housing 206, according to examples of the present disclosure. The fastener 500 is threaded into a receptacle 700 formed in the rear housing 206. The receptacle 700 is located on, or defined within, a standoff 702 of the rear housing 206. The first inverter 106(1) directly abuts the standoff 702. Compared to FIG. 6, for example, whereby the first post 444(1) is disposed between the first inverter 106(1) and the rear housing 206, certain mounting locations between the first inverter 106(1) and the rear housing 206 do not require the posts 444. That is, in FIG. 7, the first inverter 106(1) directly abuts the rear housing 206, thereby eliminating the need for the posts 444.

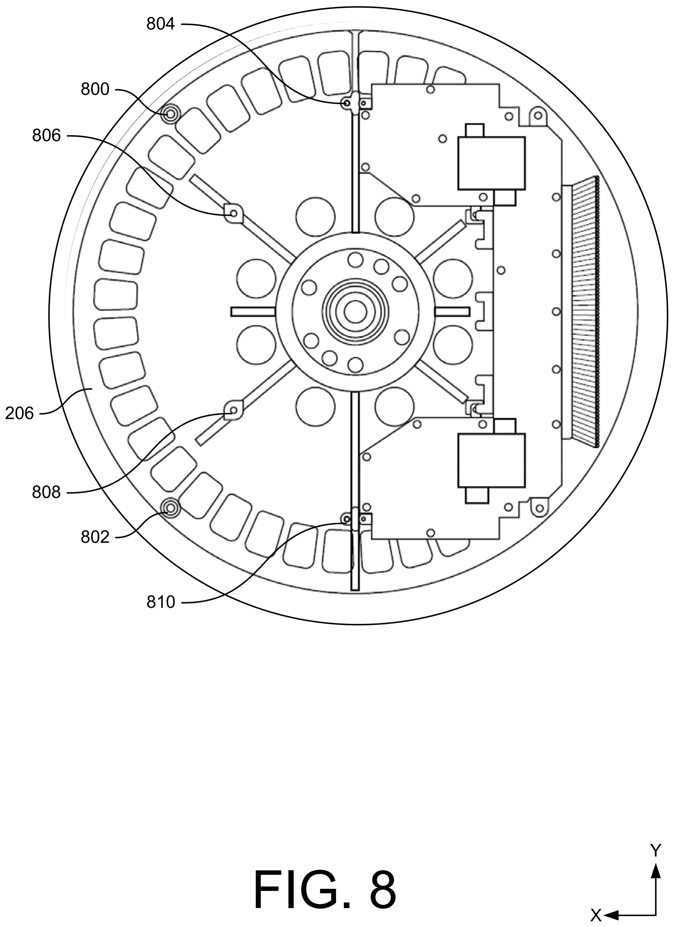

FIG. 8 illustrates example mounting locations for the inverters 106, according to examples of the present disclosure. In some instances, the inverters 106 couple to the rear housing 206 at six mounting locations. In FIG. 8, the mounting locations are described with regard to the first inverter 106(1). Additionally, in FIG. 8 the first inverter 106(1) is shown removed to illustrate the mounting locations. The discussion in FIG. 8 similarly applies to the mounting locations for the second inverter 106(2).

The mounting locations include a first mounting location 800, a second mounting location 802, a third mounting location 804, a fourth mounting location 806, a fifth mounting location 808, and a sixth mounting location 810. In some instances, the first inverter 106(1) directly couples to the rear housing 206 at the first mounting location 800, the second mounting location 802, the third mounting location 804, the fourth mounting location 806, the fifth mounting location 808, and the sixth mounting location 810. In some instances, the posts 444 are disposed between the first inverter 106(1) and the first mounting location 800 and the second mounting location 802. For example, the first post 444(1) is disposed between the first inverter 106(1) and the first mounting location 800. The second post 444(2) is disposed between the first inverter 106(1) and the second mounting location 802.

At the first mounting location 800 and the second mounting location 802, the first inverter 106(1) does not directly abut the rear housing 206. Comparatively, at the third mounting location 804, the fourth mounting location 806, the fifth mounting location 808, and the sixth mounting location 810, the first inverter 106(1) directly abuts the rear housing 206. For example, the rear housing 206 defines standoffs (e.g., similar to the standoff 702) against which the first inverter 106(1) is seated. However, in some instances, the posts 444 are disposed between the first inverter 106(1) and the rear housing 206 at the third mounting location 804, the fourth mounting location 806, the fifth mounting location 808, and the sixth mounting location 810. As such, a gap distance disposed between the first inverter 106(1) and the rear housing 206 at the mounting locations are different, and the length of the posts 444 are correspondingly different.

At the mounting locations, the rear housing 206 defines receptacles for receiving fasteners. For example, as discussed above with regard to FIGS. 6 and 7, the rear housing defines the receptacle 602 and the receptacle 700 for receiving the fastener 600 and the fastener 500 for coupling the first inverter 106(1) to the rear housing 206. Moreover, because of the different gap distances disposed between the first inverter 106(1) and the rear housing 206, the fastener 500 may be shorter than the fastener 600. The fasteners associated with the mounting locations may be different in length depending upon the gap distance.

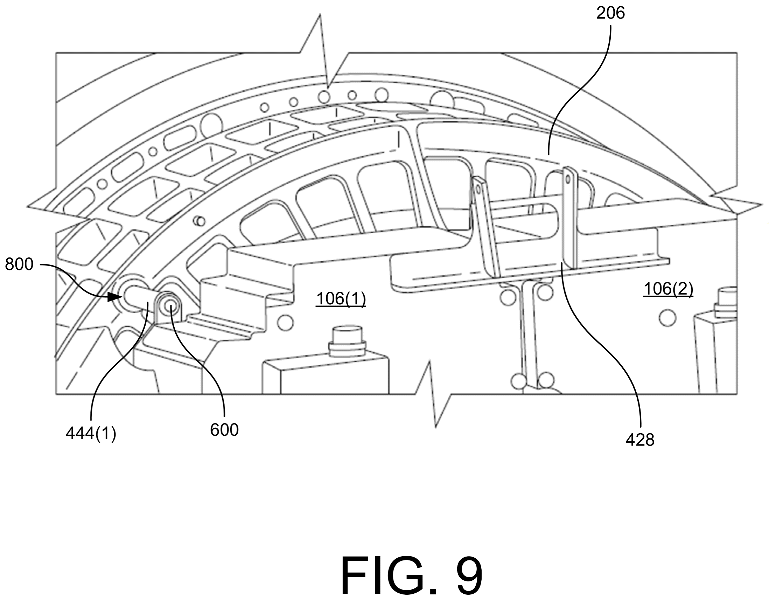

FIG. 9 illustrates a coupling of the inverters 106 to the rear housing 206, according to examples of the present disclosure. As introduced above, the inverters 106 couple to the rear housing 206 at different mounting locations. For example, each of the inverters 106 couple to the rear housing 206 at six mounting locations. In FIG. 9, the first inverter 106(1) is shown coupled to the rear housing 206 at the first mounting location 800, for example, via the first post 444(1) and the fastener 600 disposed through the first post 444(1) and into the receptacle 602 formed by the rear housing 206. As also shown in FIG. 9, the bracket 428 couples the first inverter 106(1) and the second inverter 106(2) together.

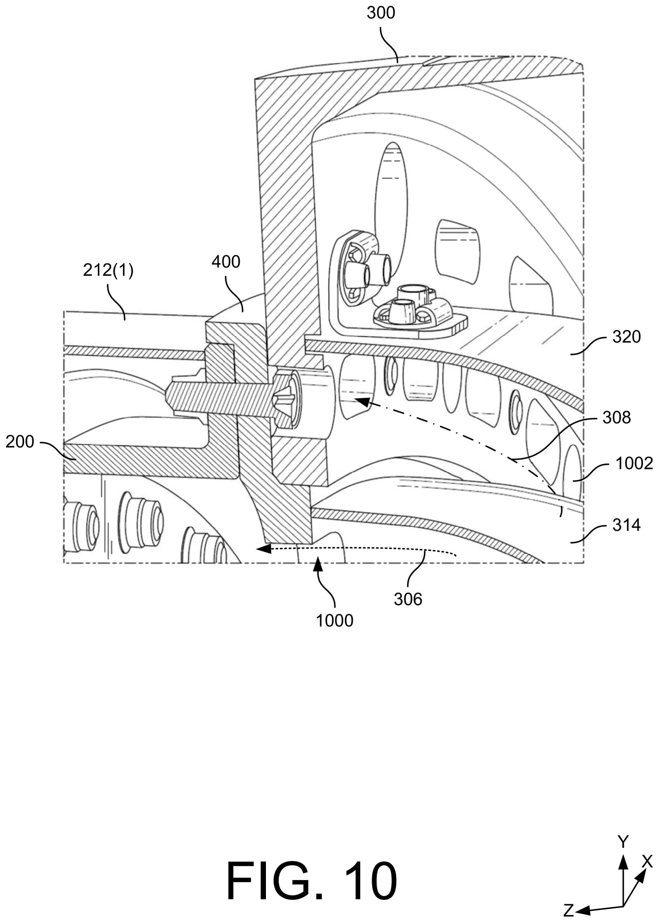

FIG. 10 illustrates a routing of the clean airflow 306 and the dirty airflow 308 through portions of the propulsor 100, according to examples of the present disclosure. The clean airflow 306 routes within the internal inlet shroud 314 (via the front housing 312). The clean airflow 306 passes through the flange 400, which is be a component of the internal inlet shroud 314. For example, openings 1000 in the flange 400 permit the clean airflow 306 to flow into the electric motor 104, internal to the stator 200.

The flange 400 couples to the airframe 300 and the stator 200. The flange 400 includes the openings 402 that route the dirty airflow 308, which flows between the internal inlet shroud 314 and the external inlet shroud 320, over an external side of the stator 200. The airframe 300 also includes openings 1002 that permit the dirty airflow 308 to pass there through. As shown and as discussed previously, the external inlet shroud 320 couple to the airframe 300.

While various examples and embodiments are described individually herein, the examples and embodiments may be combined, rearranged, and modified to arrive at other variations within the scope of this disclosure.

Although the subject matter has been described in language specific to structural features and/or methodological acts, it is to be understood that the subject matter defined in the appended claims is not necessarily limited to the specific features or acts described. Rather, the specific features and acts are disclosed as illustrative forms of implementing the claims.

### EXAMPLE CLAUSES

The following paragraphs describe various examples. Any of the examples in this section may be used with any other of the examples in this section and/or any of the other examples or embodiments described herein.
A: An electric motor, comprising: a stator having a first side and a second side; a first housing coupled to the first side of the stator; a second housing coupled to the second side of the stator; a shaft having a first end and a second end, the shaft being rotatably supported by a first bearing and a second bearing; a propeller coupled to the first end of the shaft; and an inverter including an inverter housing directly coupled to the first housing.
B: The electric motor of paragraph A, further comprising an impeller coupled to the shaft, wherein the impeller is configured to direct airflow through the electric motor and across the inverter housing during operation of the electric motor.
C: The electric motor of paragraph A or B, further comprising a first airflow duct and a second airflow duct, wherein the impeller draws: a first portion of air through the first airflow duct and through the stator, and a second portion of air through the second airflow duct and across a portion of the inverter housing.
D: The electric motor of any of paragraphs A-C, wherein the first housing includes a plurality of openings, wherein the first portion of the air passes through the plurality of openings.
E: The electric motor of any of paragraphs A-D, wherein at least six fasteners couple the inverter housing directly to the first housing.
F: An electric motor, comprising: a stator; an air separator configured to separate incoming air into a first airflow and a second airflow; a first housing coupled to a first side of the stator; a second housing coupled to a second side of the stator; one or more inverters directly coupled to the second housing; one or more first shrouds that direct the first airflow into the electric motor; and one or more second shrouds that direct the second airflow around the electric motor to the one or more inverters.
G: The electric motor of paragraph F, wherein the one or more first shrouds further direct the second airflow around the electric motor.
H: The electric motor of paragraph F or G, wherein: the one or more inverters include at least a first inverter and a second inverter; and the first inverter and the second inverter couple together via one or more brackets.
I: The electric motor of any of paragraphs F-H, further comprising an impeller, wherein the impeller is configured to direct the first airflow into the electric motor.
J: The electric motor of any of paragraphs F-I, wherein the impeller is configured to direct the second airflow around the electric motor to the one or more inverters.
K: The electric motor of any of paragraphs F-J, wherein: the second housing includes a plurality of orifices; and the first airflow exits the electric motor via the plurality of orifices.
L: The electric motor of any of paragraphs F-K, wherein the one or more inverters include a first inverter and a second inverter, further comprising: one or more first posts disposed between the first inverter and the second housing; one or more second posts disposed between the second inverter and the second housing; one or more first fasteners, wherein individual first fasteners of the one or more first fasteners are disposed through individual first posts of the one or more first posts to couple the first inverter to the second housing; and one or more second fasteners, wherein individual second fasteners of the one or more second fasteners are disposed through individual second posts of the one or more second posts to couple the second inverter to the second housing.
M: The electric motor of any of paragraphs F-L, wherein the first airflow and the second airflow are directed to provide cooling to the one or more inverters.
N: An electric motor, comprising: a stator; a first inverter coupled to the electric motor, the first inverter configured to be cooled via a first portion of a first airflow that routes internal to the stator and a first portion of a second airflow that routes external to the stator; and a second inverter coupled to the electric motor, the second inverter configured to be cooled via a second portion of the first airflow and a second portion of the second airflow.
O: The electric motor of paragraph N, further comprising a housing coupled to the stator, the housing including a plurality of orifices, wherein the first airflow passes through the plurality of orifices.
P: The electric motor of paragraph N or O, wherein: an entirety of the first portion of the first airflow is routed to provide cooling to the first inverter; an entirety of the second portion of the first airflow is routed to provide cooling to the second inverter; an entirety of the first portion of the second airflow is routed to provide cooling to the first inverter; and an entirety of the second portion of the second airflow is routed to provide cooling to the second inverter.
Q: The electric motor of any of paragraphs N-P, further comprising: one or more first shrouds that form a first channel for routing the first airflow internal to the stator; and one or more second shrouds that form a second channel for routing the second airflow external to the stator.
R: The electric motor of any of paragraphs N-Q, wherein: the first portion of the second airflow is routed across a heat sink of the first inverter; and the second portion of the second airflow is routed across a heat sink of the second inverter.
S: The electric motor of any of paragraphs N-R, wherein: the first airflow is routed internally to the first inverter and the second inverter; and the second airflow is routed externally to the first inverter and the second inverter.
T: The electric motor of any of paragraphs N-S, further comprising one or more brackets that couple the first inverter and the second inverter together.

While the example clauses described above are described with respect to one particular implementation, it should be understood that, in the context of this document, the content of the example clauses may also be implemented via a method, device, system, computer-readable medium, and/or another implementation. Additionally, any of the examples A-T may be implemented alone or in combination with any other one or more of the examples A-T.

## Claims

1. An electric motor, comprising:
a stator having a first side and a second side;
a first housing coupled to the first side of the stator;
a second housing coupled to the second side of the stator;
a shaft having a first end and a second end, the shaft being rotatably supported by a first bearing and a second bearing;
a propeller coupled to the first end of the shaft; and
an inverter including an inverter housing directly coupled to the first housing.

2. The electric motor of claim 1, further comprising an impeller coupled to the shaft, wherein the impeller is configured to direct airflow through the electric motor and across the inverter housing during operation of the electric motor.

3. The electric motor of claim 2, further comprising a first airflow duct and a second airflow duct, wherein the impeller draws:
a first portion of air through the first airflow duct and through the stator, and
a second portion of air through the second airflow duct and across a portion of the inverter housing.

4. The electric motor of any of claim 3, wherein the first housing includes a plurality of openings, wherein the first portion of the air passes through the plurality of openings.

5. The electric motor of any of claims 1, 2, 3, or 4, wherein at least six fasteners couple the inverter housing directly to the first housing.

6. An electric motor, comprising:
a stator;
an air separator configured to separate incoming air into a first airflow and a second airflow;
a first housing coupled to a first side of the stator;
a second housing coupled to a second side of the stator;
one or more inverters directly coupled to the second housing;
one or more first shrouds that direct the first airflow into the electric motor; and
one or more second shrouds that direct the second airflow around the electric motor to the one or more inverters.

7. The electric motor of claim 6, wherein at least one of the following applies:
(a) the one or more first shrouds further direct the second airflow around the electric motor;
(b) the one or more inverters include at least a first inverter and a second inverter; and the first inverter and the second inverter couple together via one or more brackets.

8. The electric motor of claim 6 or 7, further comprising an impeller, wherein the impeller is configured to direct the first airflow into the electric motor, and
optionally wherein the impeller is configured to direct the second airflow around the electric motor to the one or more inverters.

9. The electric motor of any one of claims 6 to 8, wherein at least one of the following applies:
(a) the second housing includes a plurality of orifices; and the first airflow exits the electric motor via the plurality of orifices;
(b) the first airflow and the second airflow are directed to provide cooling to the one or more inverters.

10. The electric motor of any one of claims 6 to 9, wherein the one or more inverters include a first inverter and a second inverter, further comprising:
one or more first posts disposed between the first inverter and the second housing;
one or more second posts disposed between the second inverter and the second housing;
one or more first fasteners, wherein individual first fasteners of the one or more first fasteners are disposed through individual first posts of the one or more first posts to couple the first inverter to the second housing; and
one or more second fasteners, wherein individual second fasteners of the one or more second fasteners are disposed through individual second posts of the one or more second posts to couple the second inverter to the second housing.

11. An electric motor, comprising:
a stator;
a first inverter coupled to the electric motor, the first inverter configured to be cooled via a first portion of a first airflow that routes internal to the stator and a first portion of a second airflow that routes external to the stator; and
a second inverter coupled to the electric motor, the second inverter configured to be cooled via a second portion of the first airflow and a second portion of the second airflow.

12. The electric motor of claim 11, further comprising a housing coupled to the stator, the housing including a plurality of orifices, wherein the first airflow passes through the plurality of orifices.

13. The electric motor of claim 11 or 12, wherein:
an entirety of the first portion of the first airflow is routed to provide cooling to the first inverter;
an entirety of the second portion of the first airflow is routed to provide cooling to the second inverter;
an entirety of the first portion of the second airflow is routed to provide cooling to the first inverter; and
an entirety of the second portion of the second airflow is routed to provide cooling to the second inverter.

14. The electric motor of any one of claims 11 to 13, further comprising:
one or more first shrouds that form a first channel for routing the first airflow internal to the stator; and
one or more second shrouds that form a second channel for routing the second airflow external to the stator.

15. The electric motor of any one of claims 11 to 14, wherein at least one of the following applies:
(a) the first portion of the second airflow is routed across a heat sink of the first inverter; and the second portion of the second airflow is routed across a heat sink of the second inverter;
(b) the first airflow is routed internally to the first inverter and the second inverter; and the second airflow is routed externally to the first inverter and the second inverter;
(c) the electric motor further comprises one or more brackets that couple the first inverter and the second inverter together.
